# EUROPEAN PATENT APPLICATION

(11) **EP 1 176 779 A2**
(43) Date of publication of application: **30.01.2002**
(21) Application number: 00122393.2
(22) Date of filing: 25.10.2000
(51) Int. Cl.: H04L 29/06, G06F 17/30

(54) **System and method for interconnecting world wide web sites**

(30) Priority: 24.07.2000 US 624520
(71) Applicant: ViaGOLD Direct Network Limited, Causeway Bay, Hong Kong (CN)
(72) Inventor: Kung, Tien Mei, Hong Kong (CN)
(74) Representative: Wilhelms, Rolf E., Dr.

(57) **Abstract**

A system and a method for interconnecting world wide web (WWW) sites can link the input/output interface to one web site of world wide web for downloading the information of the web site to be displayed on the browser screen of the input/output interface. Through such a system or method, the user can input web site codes such as TCP/IP addresses, domain names, numbers or letters in the input URL box on the browser screen and then the web site code search engine can ambiguously compares the input web site code with the web site codes pre-stored in the web site code-TCP/IP address comparing database to find out the corresponding TCP/IP address. Then, the corresponding TCP/IP address is sent to the connection control module for connecting the browser of the input/output interface with the homepage of the web site. If the web site code search engine can not find out the corresponding TCP/IP address as the user inputs an incomplete or incorrect information, the similar web site codes obtained from the web site code-TCP/IP address comparing database will be sent to the input/output interface after ambiguously comparing procedure for allowing the users to select the desired one to be input in the input URL box for repeating the above-described ambiguously comparing procedure until the TCP/IP address corresponding to the desired web site is found.

## Description

### FIELD OF THE INVENTION

The present invention relates to systems and methods for interconnecting world wide web (WWW) sites, and especially to a system and a method for interconnecting world wide web sites, which can allow users to input TCP/IP addresses, domain names, numbers or letters in the input URL box oo the browser screen for linking and browsing one world wide web site.

### BACKGROUND OF THE INVENTION

Currently, in the widely used domain name system (DNS) of internet, when a client requests the server to a TCP/IP address by inputting a domain name, the database storing a domain name-TCP/IP address checklist in the server will provide the TCP/IP address corresponding to the input domain name. If the user directly inputs a TCP/IP address in the input URL box on the screen of the browser, the server can directly link the web site corresponding to the input TCP/IP address and download the information of the homepage to be displayed on the browser screen without needing to perform the domain name-TCP/IP address conversion. If the user inputs a domain name in the input URL box on the screen of the browser, the server will find out the TCP/IP address corresponding to the input domain name from its database and then perform the domain name-TCP/IP address conversion to link the web site corresponding to the TCP/IP address for downloading the information of its homepage.

Specifically, a general way for linking the frontpage of the web site is to directly input a TCP/IP address such as 192.168.3.10 or a complete domain name such as in the input URL box on the browser screen to be processed by the server so as to obtain the corresponding TCP/IP address for linking the frontpage of this web site.

However, if the user can not exactly spell the TCP/IP address or the domain name of the web site or can not input the complete domain name of the web site when using the conventional system and method for interconnecting world wide web sites, the desired web site can not be linked because the server can not find out the corresponding TCP/IP address from its database. Furthermore, except the famous or well-known domain names, it is uneasy for users to remember all domain names exactly for lack of dominant. In addition, the domain names are increased day by day thereby resulting in the difficulty of remembering so many domain names. Therefore, because the domain name often can not be spelled or input exactly and completely, it is a big annoyance for those who would like to use the internet. If the user would like to use letters (that is, a simple combination of letters rather than the generally used domain name) to search the frontpage of the desired web site in an ambiguously comparing manner, he must first enter the wet site which provides the ambiguously comparing function using letters, for example, , but not directly using the server to search the web site by letters in a ambiguously comparing manner. In other words, if the user can not input the domain name correctly or can not connect with the search engine web site, there is no other way to link the desired web sites. Therefore, it is desirable to improve the drawbacks of the conventional system and method for interconnecting world wide web sites. Because a simple combination of letters or numbers (rather than the generally used domain names) can not be converted to the corresponding TCP/IP address through the conventional DNS server, the user can not input letters or numbers in the input URL box on the browser screen to link the desired web site,

Thus, it is a task of the greatest urgency at present to find out a system and a method for interconnecting world wide web sites which can allow users to directly input TCP/IP addresses, domain names, numbers or letters in the input URL box on the browser screen to be converted to the corresponding or related TCP/IP address through the server in a ambiguously comparing manner.

### SUMMARY OF THE INVENTION

An object of the present invention is to provide a system and a method for interconnecting world wide web sites which can provide similar web site codes for users to select when users input incorrect or incomplete web site codes in the input URL box on the browser screen in order to avoid inputting the desired web site codes again under the unsuccessfully linking condition.

Another object of the present invention is to provide a system and a method for interconnecting world wide web sites which can provide similar web site codes for users to select when users input incorrect or incomplete web site codes in the input URL box on the browser screen in order to still obtain the related information of web site codes and find out the desired web site codes to link the corresponding web site even when the users can not confirm the correct or complete web site codes.

Another further object of the present invention is to provide a system and a method for interconnecting world wide web sites which can provide similar web site codes for users to select when users input incorrect or incomplete web site codes in the input URL box on the browser screen in order to still obtain the related information of web site codes and find out the desired web site codes to link the corresponding web site even when the users can not confirm the correct or complete web site codes thereby eliminating the inconvenience of search operation.

Another yet object of the present invention is to provide a system and a method for interconnecting world wide web sites, which can convert the web site codes to the corresponding TCP/IP address for linking and browsing the web site when the web site code in the input URL box on the browser screen, input by the users, is one of TCP/IP addresses, domain names, numbers and letters.

A method for interconnecting world wide web sites, which can link an input/output interface of the user with one web site for allowing the user to interact with the linked web site over the input/output interface, includes the steps of: (1) inputting a web site code into the input/output interface by the user; (2) receiving the web site code from the input/output interface by a connection-required input interface to judge whether or not the web site code is a TCP/IP address; if not then sending the input web site code to a web site code search module connected with the connection-required input interface and going to a step (3); if yes then going to a step (6); (3) searching whether there is a TCP/IP address corresponding to the input web site code from a web site code-TCP/IP address comparing database stored in the network connecting system; (4) finding out a corresponding TCP/IP address in the web site code-TCP/IP address comparing database and sending the corresponding TCP/IP address to a connection control module to go to a step (6) in the first instance, and actuating a web site code comparing module and going to a step (5) in the second instance; (5) ambiguously comparing the input web site code with web site codes pre-stored in the database to find out at least one similar web site code to be sent to the connection control module; (6) judging the information received by the connection control module, wherein if the received information is the similar web site code obtained at the step (5), the similar web site code is sent to an output control module for going to a step (7), and if the received information is the TCP/IP address obtained from one of the steps (2) and (4), the process goes to a step (8); (7) sending the similar web site code to the input/output interface by the output control module for allowing the user to select the desired one and going back to the step (1); and (8) finding out and linking a web site having the corresponding TCP/IP address and sending a frontpage information of the web site to the input/output interface by the output control module for allowing the user to interact with the web site through the input/output interface.

A system for interconnecting world wide web sites of the present invention includes a connection-required input interface for receiving a web site code input by a user and judging whether or not the input web site code is a TCP/IP address; a web site code search module having a web site code search engine and a web site code comparing engine, receiving the input web site code from the connection-required input interface, and converting it to the corresponding TCP/IP address to be output; a web site code-TCP/IP address comparing database for allowing the web site code search engine to search a TCP/IP address corresponding to the input web site code therefrom and allowing the web site code comparing engine to ambiguously compare the input web site code with web site codes stored in the database; a connection control module for receiving the TCP/IP addresses from the connection-required input interface and the web site code search engine, respectively, finding and linking a web site corresponding to the TCP/IP address, and receiving the similar web site codes from the web site code comparing engine; and an output control module for sending an information of the web site and the similar web site codes from the connection control module to the input/output interface.

The system for interconnecting world wide web sites of the present invention can be built in a personal computer (PC), a notebook computer, a hand-held computer or a server. It can also be integrated as a peripheral device to be externally connected between the computer and the server. In addition, it can also be partially built in a computer and the remained portion is built in a server, depending on the really required application.

The input web site code can be a TCP/IP address, a domain name, a combination of numbers, a combination of letters, or a mixed conbination of numbers and letters. If two or more kinds of web site codes are input when using the system and method of the present invention, two or more web site code search modules and two or more web site code-TCP/IP address comparing databases are required.

### BRIEF DESCRIPTION OF THE DRAWINGS

The present invention may best be understood through the following description with reference to the accompanying drawings, in which:
Fig. 1 is a block diagram showing the first preferred embodiment of a system for interconnecting world wide web sites according to the present invention;
Fig. 2 is a flowchart showing how to link the wet site through the first preferred embodiment of the system for interconnecting world wide web sites according to the present invention;
Fig. 3 is a flowchart showing how to link the wet site by inputting a correct or complete domain name when using the system for interconnecting world wide web sites according to the present invention;
Fig. 4 is a flowchart showing how to link the wet site by inputting an incorrect or incomplete domain name when using the system for interconnecting world wide web sites according to the present invention;
Fig. 5 is a flowchart showing how to link the wet site by inputting a TCP/IP address when using the system for interconnecting world wide web sites according to the present invention;
Fig. 6 is a block diagram showing the second preferred embodiment of a system for interconnecting world wide web sites according to the present invention; and
Fig. 7 is a flowchart showing how to link the wet site by inputting a web site code when using the second preferred embodiment of the system for interconnecting world wide web sites according to the present invention.

### DETAILED DESCRIPTION OF THE PREFERRED EMBODIMENT

The present invention will now be described more detailedly with reference to the following embodiments. It is to be noted that the following descriptions of the preferred embodiments of this invention are presented herein for the purpose of illustration and description only. It is not intended to be exhaustive or to be limited to the precise form disclosed.

### First Preferred Embodiment

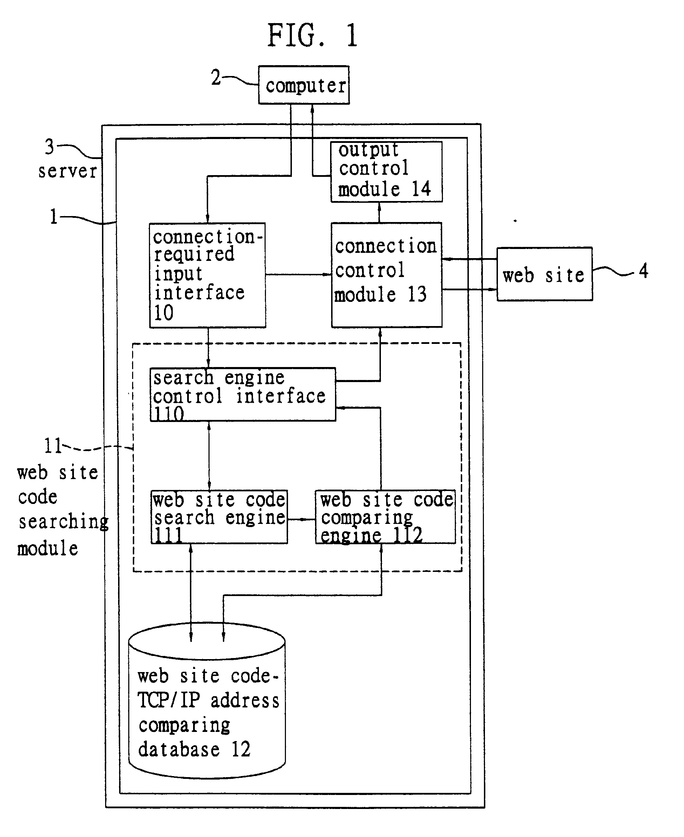

Fig. 1 is a block diagram showing the basic configuration of the first preferred embodiment of a system for interconnecting world wide web sites according to the present invention. As shown in this figure, the system for interconnecting world wide web sites is constructed in a server 3. As the server 3 is linked with the client computer 2 to establish a network, a user can interact with the desired web site 4 through the client computer 2 and the server 3.

The system for interconnecting world wide web sites includes a connection-required input interface 10 connected to the computer 2, a web site code search module 11 connected with the connection-required input interface 10 and having a search engine control interface 110, a web site code search engine 111 and a web site code comparing engine 112,
a web site code-TCP/IP address comparing database 12 connected with the web site code search module 11, a connection control module 13 respectively connected with the connection-required input interface 10 and the web site code search module 11, and an output control module 14 respectively connected with the connection control module 13 and the computer 2.

The connection-required input interface 10 is used for receiving a web site code, input by a user, through the client computer 2. After receiving the web site code, the connection control module 13 is actuated to receive the search result from the web site code search module 11 or the judged result from the connection-required input interface 10 (as described below). Immediately when or after the connection control module 13 is in a ready state, the connection-required input interface 10 will judge whether the input web site code is a TCP/IP address or non-TCP/IP address (for example, the domain name, the combination of numbers, the combination of letters, or the combination of numbers and letters). If the input web site code is a TCP/IP address, the connection-required input interface 10 will directly send this TCP/IP address to the connection control module 13; otherwise the connection-required input interface 10 will send the input web code to the web site code search module 11.

The search engine control interface 110 of the web site code search module 11 is used for receiving the input web site code from the connection-required input interface 10. After receiving the web site code, the web site code search engine 111 connected with the search engine control interface 110 is actuated to search a TCP/IP address corresponding to the web site code from the web site code-TCP/IP address comparing database 12. If the corresponding TCP/IP address is found, it will be sent to the search engine control interface 110 by the web site code search engine 111 and then the search engine control interface 110 will send the found TCP/IP address to the connection control module 13. If the input web site code is incorrect or incomplete such that the web site code search engine 111 can not find out the corresponding TCP/IP address from the database 12, the web site code comparing engine 112 is actuated to ambiguously compare the input web site code with the web site codes stored in the database 12 to find out at least one similar web site code and send this compared result to the search engine control interface 110 to be sent to the connection control module 13. Because the web site code comparing engine 112 adopts the ambiguously comparing manner, all prior comparing ways are suitably used without particular limits so that the detailed description is omitted.

The web site code-TCP/IP address comparing database 12 stores all web site codes and their corresponding TCP/IP address.

The connection control module 13 is used for receiving the TCP/IP address from the connection-required input interface 10 or the web site code search module 11 and finding and linking a web site 4 according to this TCP/IP address. The frontpage information of the web site 4 can be sent to the browser of the client computer 2 through the output control module 14 connected with the connection control module 13 for allowing users to interact with the web site 4 through the computer 2.

As described above, if the system 1 for interconnecting world wide web sites of the present invention is required to provide the users with more than one web site code in order to link the desired web site, it should handle the connection requests, for example, the domain name and the combination of numbers (such as "1234567"). In addition, the web site code search module 11 must be constituted by the domain name search engine control interface, the domain name search engine, and the domain name comparing engine for processing the domain name, and the number search engine control interface, the number search engine, and the number comparing engine for processing the combination of numbers. Relatively, the web site code-TCP/IP address comparing database 12 must be divided into the domain name-TCP/IP address comparing database and the number-TCP/IP address comparing database. Therefore, as a web site code is input into the client computer 2 by a user and received by the connection-required input interface 10, the connection-required input interface 10 will judge whether the input web site code is a TCP/IP address, a domain name or the combination of numbers. If the input web site code is a TCP/IP address, the input TCP/IP address will be directly sent to the connection control module 13 for connecting the corresponding web site 4 by the connection-required input interface 10. If the input web site code is a domain name, it will be sent to the domain name search engine control interface and the domain name search engine is actuated by the domain name search engine control interface to search a TCP/IP address corresponding to the input domain name from the domain name-TCP/IP address comparing database. If the input web site code is the combination of numbers, it will be sent to the number search engine control interface and the number search engine is actuated by the number search engine control interface to search a TCP/IP address corresponding to the input numbers from the number-TCP/IP address comparing database. Because the construction of the above-described system can be easily extrapolated from Fig. 1 so that the detailed description is omitted.

Similarly, as the system of the present invention is required to provide more than one similar web site code for linking the desired web site when the user inputs a mixed combination of domain names, letters, and numbers (e.g. "AABCC" or "DG4237"), the required constructions of the web site code search module 11 and the web site code-TCP/IP address comparing database 12 can be easily extrapolated from the above description so that the detailed description is also omitted.

As above-mentioned, the system 1 for interconnecting world wide web sites of the present invention is built in the server 3. However, it can also be built within the client computer 2 or integrated as a peripheral equipment to be externally connected between the computer 2 and the server 3. In addition, it can also be partially built in a computer 2 and the remained components are built in a server 3, depending on the really required application.

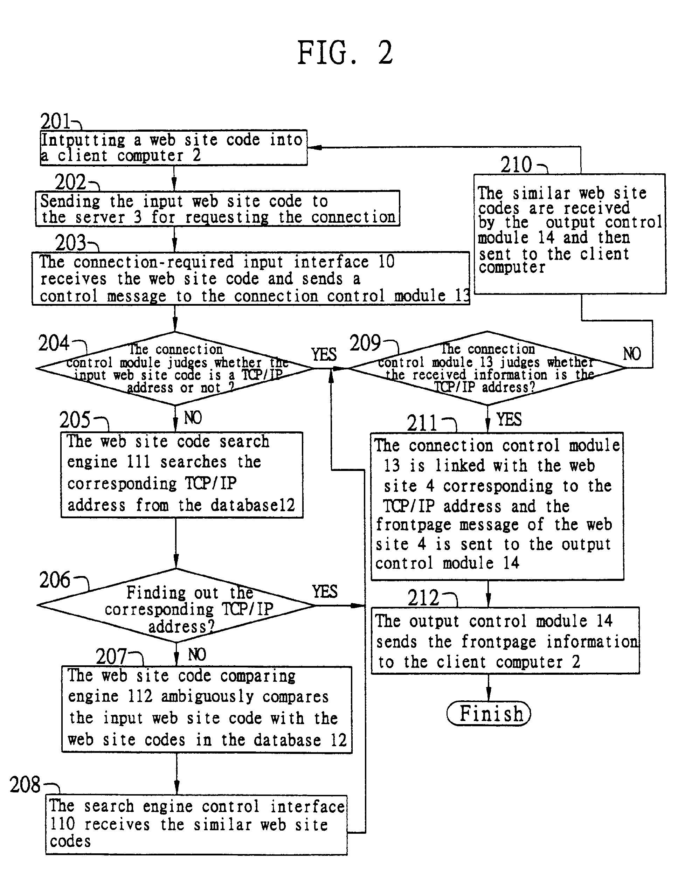

Fig. 2 is a flowchart showing how the user links the wet site by inputting a web site code through the first preferred embodiment of the system for interconnecting world wide web sites according to the present invention.

As shown in Fig. 2, at step 201, the client computer 2 is connected with the server 3 and a user inputs the desired web site code in the input URL box on the browser screen of the computer 2. The web site code can be a TCP/IP address, a domain name, a combination of numbers,, or the mixed combination of letters and numbers.

At step 202, after the inputs web site code is sent to the server 3 for requesting the connection.

At step 203, after the connection-required input interface 10 within the server 3 receives the web site code from the computer 2, a control message is sent to the connection control module 13 by the connectionrequired input interface 10 for having the connection control module 13 receive the search result from the web site code search module 11 or the judged result from the connection-required input interface 10.

At step 204, the connection control module 13 is in a ready state to judge whether the input web site code is a TCP/IP address or non-TCP/IP address. If the input web site code is a TCP/IP address, the process goes to step 209; otherwise the process goes to step 205.

At step 205, after the search engine control interface 110 of the web site code search module 11 receives the web site code from the connection-required input interface 10, the web site code search engine 111 is actuated and the input web site code is sent to the web site code search engine 111 for allowing it to search the corresponding TCP/IP address from the web site code-TCP/IP address comparing database 12.

At step 206, if the web site code search engine 111 finds out a TCP/IP address corresponding to the input web site code from the database 12, the found TCP/IP address will be sent back to the search engine control interface 110 by the web site code search engine 111. Therreafter, the found TCP/IP address is sent to the connection control module 13 by the search engine control interface 110 to go to step 209. If the web site code search engine 111 can not find out the corresponding TCP/IP address due to incorrect or incomplete web site code, the web site code comparing engine 112 is actuated by the web site code search engine 111 to ambiguously compare the input web site code with the web site codes stored in the database 12.

At step 207, the input web site code is ambiguously compared with the web site codes stored in the database 12 one by one to find out at least one similar web site code.

At step 208, the similar web site codes obtained from step 207 are sent to the search engine control interface 110 by the web site code comparing engine 112. Then, the similar web site codes are sent to the connection control module 13 by the search engine control interface 110.

At step 209, the connection control module 13 judges the received information. If the received information is the similar web site code obtained from step 208, then the process goes to step 210. If the received information is the TCP/IP address from steps 204 and 206, then the process goes to step 211.

At step 210, the similar web site codes obtained from step 208 are sent to the output control module 14 by the connection control module 13 and then sent to the client computer 2 by the output control module 14 to be displayed on the browser screen of the computer 2 for allowing the user to select the desired one and returning to step 201.

At step 211, when the connection control module 13 finds out and links with the web site 4 corresponding to the TCP/IP address, the frontpage message of the web site 4 is sent to the output control module 14.

At step 212, after the output control module 14 receives the frontpage information of the web site 4 from the connection control module 13, the frontpage information is sent to the client computer 2 to be displayed in the browser of the computer 2 for allowing users to interact with the web site 4.

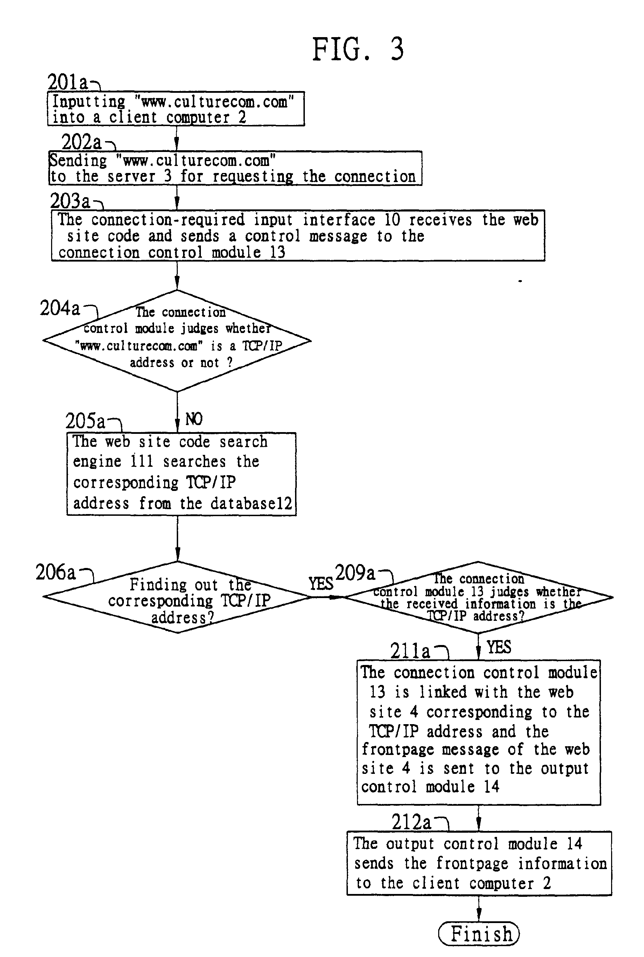

Figs. 3∼5 are flowchart partially showing the actual operation of the system for interconnecting world wide web sites according to the present invention by inputting a complete domain name (or a combination of numbers or letters), an incomplete or incorrect domain name (or a combination of numbers or letters), and a TCP/IP address, respectively.

As shown in Fig. 3, at step 201a, a user inputs a domain name "www.culturecom.com" (or a combination of numbers "12345" or a combination of letters "culturecom") in the input URL box on the browser screen of the computer 2.

At step 202a, after "www.culturecom.com" is input into the computer 2, it is sent to the server 3 for requesting the connection of web site.

At step 203a, the connection-required input interface 10 in the server 3 receives the domain name "www.culturecom.com" from the computer 2 and then sends a control message to the connection control module 13 for allowing it to be ready for receiving the search result from the web site code search module 11 or the judged result from the connection-required input interface 10.

At step 204a, the connection control module 13 is in a ready state to judge the input domain namw "www.culturecom.com". Because "www.culturecom.com" is not a TCP/IP address, it is sent to the the web site code search module 11 by the connection-required input interface 10.

At step 205a, after the search engine control interface 110 of the web site code search module 11 receives "www.culturecom.com" from the connection-required input interface 10, the web site code search engine 111 is actuated to search the corresponding TCP/IP address from the web site code-TCP/IP address comparing database 12a (if the input web site code is the above-described combination of numbers "12345", the number-TCP/IP address comparing database is used; if the input web site code is the above-described combination of letters "culturecom", the letter-TCP/IP address comparing database is used).

At step 206a, when the web site code search engine 111 finds out a TCP/IP address corresponding to "www.culturecom.com" from the database 12, the found TCP/IP address is sent back to the search engine control interface 110 and then sent to the connection control module 13 by the search engine control interface 110.

At step 209a, the connection control module 13 receives and judges the received information from step 206a. If the received information is the TCP/IP address, the process goes to step 211a.

At step 211a, when the connection control module 13 finds out and links with the web site 4 corresponding to the received TCP/IP address, the frontpage message of the web site 4 is sent to the output control module 14.

At step 212a, the output control module 14 receives the frontpage information of the web site 4 from the connection control module 13 and inputs it to the client computer 2 to be displayed in the browser screen of the computer 2 for allowing users to interact with the web site 4, the domain name of which is "www.culturecom.com".

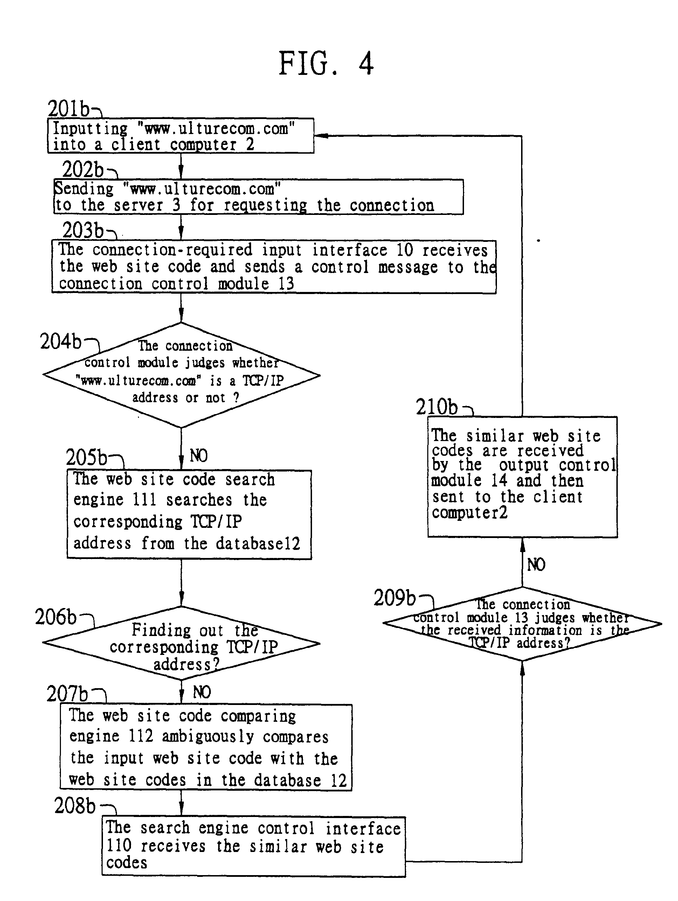

As shown in Fig. 4, when a user inputs an incomplete domain name "www.ulturecom.com" but not the complete or correct domain name "www.culturecom.com", the steps 201b to 205b are identical to the above-described steps 201a to 205a. Thus, the detail will not be described repeatedly and the description is directly begun from step 206b.

At step 206b, because the user inputs incorrect or incomplete domain name "www.ulturecom.com", the web site code search engine 111 can not find out the corresponding TCP/IP address from the database 12 so that the web site code comparing engine 112 is actuated to ambiguously compare the input web site code with those pre-stored in the database 12.

At step 207b, the web site code comparing engine 112 ambiguously compares the incomplete domain name "www.ulturecom.com" with the web site codes stored in the database 12 to find out at least one similar web site code, for example, "www.culturecom.com". Thereafter, the similar web site codes are sent to the search engine control interface 110.

At step 208b, after the search engine control interface 110 receives the similar web site codes from the web site code comparing engine 112, the similar web site codes are sent to the connection control module 13.

At step 209b, the connection control module 13 receives and judges the similar web site codes from the search engine control interface 110. If the received information is not a TCP/IP address, the process goes to step 210b.

At step 210b, the similar web site codes are sent to the output control module 14 by the connection control module 13. After the output control module 14 receives the similar web site codes from the connection control module 13, the similar web site codes are sent to the client computer 2 to be displayed on the browser screen of the computer 2 for allowing the user to select the desired one and then returning to step 201b again until the user can successfully link the desired web site.

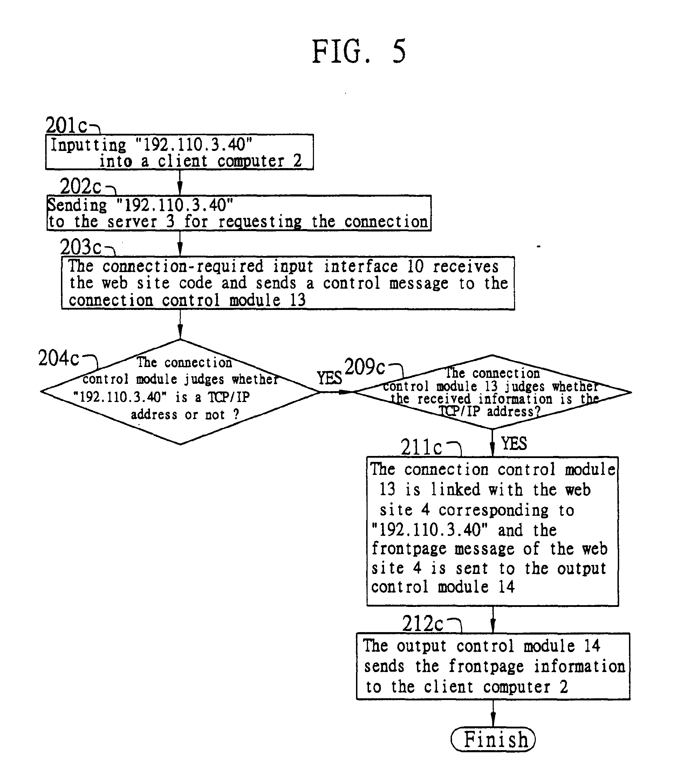

As shown in Fig. 5, when a user directly inputs the TCP/IP address "192.110.3.40" corresponding to the domain name "www.culturecom.com", the steps 201c to 203c are identical to the above-described steps 201a to 203a. Thus, thess steps will not be described repeatedly and the remained parts are directly described from step 204c.

At step 204c, the connection-required input interface 10 judges " 192.110.3.40" from the computer 2. After confirming that the input " 192.110.3.40" is a TCP/IP address, it is sent to the connection control module 13.

At step 209c, after the connection control module 13 receives and judges the input TCP/IP address "192.110.3.40" from the connection-required input interface 10, the process goes to step 211c.

At step 211c, when the connection control module 13 finds out and links with the web site 4 corresponding to "192.110.3.40", the frontpage message of the web site 4 will be sent to the output control module 14.

At step 212c, the output control module 14 receives the frontpage information of the web site 4 from the connection control module 13 and inputs it to the client computer 2 to be displayed on the browser screen of the computer 2 for allowing users to interact with the web site 4.

Therefore, from the above-described embodiment, the users can utilize the system and method for interconnecting world wide web sites of the present invention to find and link the desired web sites even under the condition of unknowing the web site code of the desired web site. For instance, if a user would like to link the web site which is associated with the food but can not make sure which one is the most suitably linked object, he can input "FOOD" or " 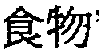 " in the input URL box on the browser screen of the computer through the system and method of the present invention to find out the web sites having the domain name similar to "FOOD" or " 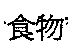 " for allowing him to link therewith one by one so as to find the most suitable web site.

### Second Preferred Embodiment

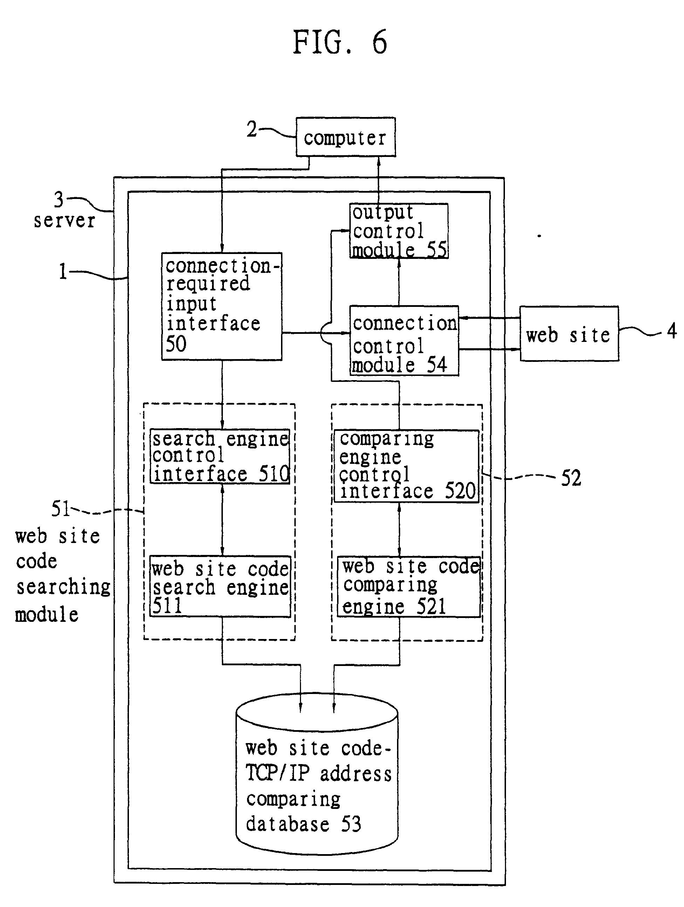

Fig. 6 is a block diagram showing the basic configuration of the second preferred embodiment of a system for interconnecting world wide web sites according to the present invention. As shown in this figure, the second preferred embodiment of the system 5 for interconnecting world wide web sites is built in the server 3 connected with the client computer 2.

The system 5 for interconnecting world wide web sites includes a connection-required input interface 50 connected with the computer 2, a web site code search module 51, a web site code comparing module 52, a web site code-TCP/IP address comparing database 53, a connection control module 54 linked with the web site 4, and an output control module 55 connected with the client computer 2.

The connection-required input interface 50 and the web site code-TCP/IP address comparing database 53 are equivalent to those described in the first embodiment so that the detail will not be described repeatedly.

The web site code search module 51 includes a search engine control interface 510 and a web site code search engine 511. The search engine control interface 510 is used for receiving the input web site code from the connection-required input interface 50 and starting the web site code search engine 511 to search a TCP/IP address corresponding to the input web site code from the web site code-TCP/IP address comparing database 53. If the TCP/IP address corresponding to the input web site code is found, it will be sent to the search engine control interface 510 by the web site code search engine 511 and then sent to the found TCP/IP address to the connection control module 54 by the search engine control interface 510. If the web site code search engine 511 can not find out the corresponding TCP/IP address from the web site code-TCP/IP address comparing database 53, that is, all web site codes stored in the database 53 are not in conformity with the input web site, the input web site code is sent back to the search engine control interface 510 and then sent to the web site code comparing module 52 to be ambiguously compared with the web site codes stored in the database 53.

The web site code comparing module 52 includes a comparing engine control interface 520 and a web site code comparing engine 521. After the comparing engine control interface 520 receives the input web site code from the search engine control interface 510, the web site code comparing engine 521 is actuated to ambiguously compare the input web site code with the web site codes stored in the database 53 to find out at least one similar web site code. Thereafter, the similar web site codes are sent back to the comparing engine control interface 520 and then the comparing engine control interface 520 sends them to the output control module 55.

The connection control module 54 is used for receiving the TCP/IP address from the connection-required input interface 50 or the search engine control interface 510 and finding and linking a web site 4 corresponding to the received TCP/IP address. Then, the frontpage information of the web site 4 is sent to the output control module 55.

The output control module 55 is used for receiving the frontpage information of the web site 4 from the connection control module 54 or the similar web site codes from the comparing engine control interface 520. The received information is sent to the client computer 2 to be displayed on the browser screen of the computer 2 for allowing the user to interact with the web site 4 or select the desired one from the similar web site codes until the desired web site is found and linked successfully.

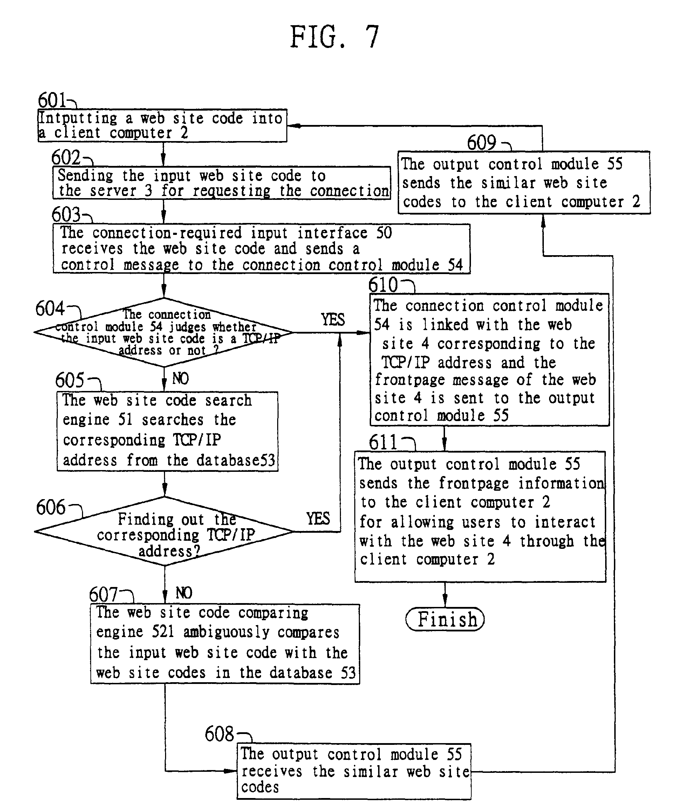

Fig. 7 is a flowchart showing how the user can link the wet site by inputting a web site code through the system for interconnecting world wide web sites according to the present invention.

As shown in Fig. 7, at step 601 a user inputs a web site code in the input URL box on the browser screen of the computer 2.

At step 602, the input web site code is sent to the server 3.

At step 603, after the connection-required input interface 50 within the server 3 receives the input web site code, it becomes in a ready state for receiving the information. Because the steps 601 to 603 in the second embodiment are identical to the steps 201 to 203 of the first embodiment, the detail will not be described again.

At step 604, the connection control module 54 is in a ready state to judge whether the input web site code is a TCP/IP address or non-TCP/IP address. If the input web site code is a TCP/IP address, the process goes to step 610; otherwise the input web site code is sent to the web site code search module 51 to go to step 605.

At step 605, immediately after the search engine control interface 510 of the web site code search module 51 receives the web site code from the connection-required input interface 50, the web site code search engine 511 is actuated to send the input web site code to the web site code search engine 511 for searching the TCP/IP address from the web site code-TCP/IP address comparing database 53.

At step 606, if the web site code search engine 511 finds out a TCP/IP address corresponding to the input web site code from the database 53, the found TCP/IP address will be sent back to the search engine control interface 510 by the web site code search engine 511. Thereafter, the found TCP/IP address is sent to the connection control module 54 by the search engine control interface 510 to undergo step 610. If the web site code search engine 511 can not find out the corresponding TCP/IP address due to incorrect or incomplete web site code, the web site code search engine 511 will send the input web site code back to the search engine control interface 510. After the input web site code is received by the search engine control interface 510, the web site code comparing module 52 is actuated and the input web site code is sent to the web site code comparing module 52 to undergo step 607.

At step 607, after the comparing engine control interface 520 of the web site code comparing module 52 receives the input web site code from the search engine control interface 510, the web site code comparing engine 521 is actuated to ambiguously compare the input web site code with the web site codes stored in the database 53 to find out at least one similar web site code.

At step 608, the similar web site codes obtained from step 607 are sent to the comparing engine control interface 520 by the web site code comparing engine 521. Then, the similar web site codes are sent to the output control module 55 by the comparing engine control interface 520.

At step 609, the similar web site codes from the web site code comparing engine 521 are sent to the client computer 2 by the output control module 55 to be displayed on the browser screen of the computer 2 for allowing the user to select the desired one and returning to step 601.

At step 610, when the connection control module 54 finds out and links the web site 4 corresponding to the TCP/IP address from step 604 or 606, the frontpage message of the web site 4 is sent to the output control module 55.

At step 611, the output control module 55 receives the frontpage information of the web site 4 from the connection control module 54 and inputs it to the client computer 2 to be displayed on the browser screen of the computer 2 for allowing users to interact with the web site 4 successfully.

While the invention has been described in terms of what are presently considered to be the most practical and preferred embodiments, it is to be understood that the invention need not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A method for interconnecting world wide web sites, wherein an input/output interface connected with a network connecting system is provided for users to interact with said world wide web sites linked with said network connecting system, comprising the steps of:
(I) inputting a web site code into said input/output interface by said users;
(2) receiving said input web site code from said input/output interface by said network connecting system and judging whether or not said input web site code is a TCP/IP address; if not then going to step (3); otherwise going to step (6);
(3) searching whether there is a TCP/IP address corresponding to said input web site code from a web site code-TCP/IP address comparing database stored in said network connecting system; if not then going to step (4); otherwise going to step (6);
(4) ambiguously comparing said input web site code with web site codes pre-stored in said database to find out at least one similar web site code;
(5) sending said at least one similar web site code obtained at said step (4) to said input/output interface for allowing said users to select the desired one and then going back to said step (1); and
(6) linking said network connecting system with a web site corresponding to said TCP/IP address from one of said steps (2) and (3) and sending a frontpage information of said web site to said input/output interface for allowing users to interact with said web site through said input/output interface.

2. The method according to claim 1 wherein said network connecting system includes:
a connection-required input interface for receiving said input web site code and judging whether or not said web site code is a TCP/IP address;
a web site code search module having a web site code search engine and a web site code comparing engine and receiving said input web site code from said connection-required input interface;
a web site code-TCP/IP address comparing database for allowing said web site code search engine to search a TCP/IP address corresponding to said input web site code therefrom and allowing said web site code comparing engine to ambiguously compare said input web site code with said web site codes stored in said database;
a connection control module for receiving said TCP/IP address from said connection-required input interface and said web site code search engine, respectively, finding and linking a web site corresponding to said TCP/IP address, and receiving said at least one similar web site code from said web site code comparing engine; and
an output control module for sending said frontpage information of said web site and said at least one similar web site code from said connection control module to said input/output interface.

3. The method according to claim 2 wherein said web site code search engine further includes a search engine control interface for managing and controlling said web site code search engine.

4. The method according to claim 1 wherein said input/output interface is a computer.

5. The method according to claim 1 wherein said input web site code is one selected from a group consisting of a TCP/IP address, a domain name, a combination of numbers, a combination of letters, and a mixed conbination of numbers and letters.

6. The method according to claim 1 wherein said network connecting system is built in a server.

7. The method according to claim 1 wherein said network connecting system is built in a computer connected to a server.

8. The method according to claim 1 wherein said network connecting system is an integrated computer peripheral equipment externally connected between a computer and a server.

9. The method according to claim 1 wherein said network connecting system is partially built in a computer and its remained portion is built in a server connected with said computer.

10. A method for interconnecting world wide web sites, wherein an input/output interface connected with a network connecting system is provided for a user to interact with a linked world wide web site, comprising the steps of:
(1) inputting a web site code into said input/output interface by said user;
(2) receiving said web site code from said input/output interface by a connection-required input interface to judge whether or not said web site code is a TCP/IP address; if not then sending said input web site code to a web site code search module connected with said connection-required input interface and going to step (3); if yes then going to step (6);
(3) searching whether there is a TCP/IP address corresponding to said input web site code from a web site code-TCP/IP address comparing database stored in said network connecting system;
(4) finding out a corresponding TCP/IP address in said web site code-TCP/IP address comparing database and sending said corresponding TCP/IP address to a connection control module to go to step (6) in the first instance, and actuating a web site code comparing module and going to step (5) in the second instance;
(5) ambiguously comparing said input web site code with web site codes pre-stored in said database to find out at least one similar web site code to be sent to said connection control module;
(6) judging the information received by said connection control module, wherein if said received information is said at least one similar web site code obtained at said step (5), said at least one similar web site code is sent to an output control module for going to step (7), and if said received information is said TCP/IP address obtained from one of said steps (2) and (4), the process goes to step (8);
(7) sending said at least one similar web site code to said input/output interface by said output control module for allowing said user to select the desired one and going back to said step (1); and
(8) finding out and linking a web site having said corresponding TCP/IP address and sending a frontpage information of said web site to said input/output interface by said output control module for allowing said user to interact with said web site through said input/output interface.

11. The method according to claim 10 wherein said input/output interface is a computer.

12. The method according to claim 10 wherein said input web site code is one selected from a group consisting of a TCP/IP address, a domain names, a combination of numbers, a combination of letters, and a mixed conbination of numbers and letters.

13. The method according to claim 10 wherein said connection-required input interface, said web site code search module, said web site code-TCP/IP address comparing database, said connection control module, and said output control module are built in a server.

14. The method according to claim 10 wherein said connection-required input interface, said web site code search module, said web site code-TCP/IP address comparing database, said connection control module, and said output control module are built in a computer connected to a server.

15. The method according to claim 10 wherein said connection-required input interface, said web site code search module, said web site code-TCP/IP address comparing database, said connection control module, and said output control module are integrated as a computer peripheral equipment externally connected between a computer and a server.

16. The method according to claim 10 wherein said connection-required input interface, said web site code search module, said web site code-TCP/IP address comparing database, said connection control module, and said output control module are partially built in a computer and the remained portions are built in a server connected with said computer.

17. A method for interconnecting world wide web sites, wherein an input/output interface is provided for a user to interact with a world wide web site linked with said input/output interface, comprising the steps of:
(1) inputting a web site code into said input/output interface by said user;
(2) receiving said input web site code from said input/output interface by a connection-required input interface to judge whether or not said web site code is a TCP/IP address; if not then sending said input web site code to a web site code search module connected with said connection-required input interface and going to step (3); otherwise going to step (7);
(3) searching whether there is a TCP/IP address corresponding to said input web site code from a web site code-TCP/IP address comparing database;
(4) finding and sending a corresponding TCP/IP address to a connection control module and going to step (7) in the first imstance, and actuating a web site code comparing module to go to step (5) in the second instance;
(5) ambiguously comparing said input web site code with web site codes pre-stored in said database to find out at least one similar web site code and send said at least one similar web site code to an output control module;
(6) sending said at least one similar web site code to said input/output interface by said output control module for allowing said user to select the desired one and then going back to said step (1);
(7) finding and linking a desired web site corresponding to said TCP/IP address from said steps (2) and (4) and sending a frontpage information of said web site to said output control module by said connection control module by said connection control module by said connection control module;
(8) sending said frontpage information of said web site to said input/output interface through said output control module for allowing said user to interact with said web site through said input/output interface.

18. The method according to claim 17 wherein said input/output interface is a computer.

19. The method according to claim 17 wherein said input web site code is one selected from a group consisting of a TCP/IP address, a domain name, a combination of numbers, a combination of letters, and a mixed conbination of numbers and letters.

20. The method according to claim 17 wherein said connection-required input interface, said web site code search module, said web site code-TCP/IP address comparing database, said connection control module, and said output control module are built in a server.

21. The method according to claim 17 wherein said connection-required input interface, said web site code search module, said web site code-TCP/IP address comparing database, said connection control module, and said output control module are built in a computer connected to a server.

22. The method according to claim 17 wherein said connection-required input interface, said web site code search module, said web site code-TCP/IP address comparing database, said connection control module, and said output control module are integrated as a computer peripheral equipment externally connected between a computer and a server.

23. The method according to claim 17 wherein said connection-required input interface, said web site code search module, said web site code-TCP/IP address comparing database, said connection control module, and said output control module are partially built in a computer and the remained portions are built in a server connected with said computer.

24. A system for interconnecting world wide web sites comprising:
a connection-required input interface for receiving a web site code input by a user and judging whether or not said input web site code is a TCP/IP address;
a web site code search module having a web site code search engine and a web site code comparing engine and receiving said input web site code from said connection-required input interface;
a web site code-TCP/IP address comparing database for allowing said web site code search engine to search a TCP/IP address corresponding to said input web site code therefrom and allowing said web site code comparing engine to ambiguously compare said input web site code with web site codes stored in said database;
a connection control module for receiving said TCP/IP addresses from said connection-required input interface and said web site code search engine, respectively, finding and linking a web site corresponding to said TCP/IP address, and receiving said at least one similar web site code from said web site code comparing engine; and
an output control module for sending an information of said web site and said at least one similar web site code from said connection control module to said input/output interface.

25. The system according to claim 24 wherein said web site code search engine further includes a search engine control interface for managing and controlling said web site code search engine.

26. A system for interconnecting world wide web sites comprising:
a connection-required input interface for receiving a web site code input by a user and judging whether or not said input web site code is a TCP/IP address;
a web site code search module for receiving said input web site code from said connection-required input interface;
a web site code comparing module for receiving said input web site code from said web site code search module;
a web site code-TCP/IP address comparing database for allowing said web site code search engine to search a TCP/IP address corresponding to said input web site code therefrom and allowing said web site code comparing engine to ambiguously compare said input web site code with web site codes stored in said database so as to find out at least one similar web site code;
a connection control module for receiving said TCP/IP addresses from said connection-required input interface and said web site code search engine, respectively, and finding and linking a web site corresponding to said TCP/IP address; and
an output control module for sending an information of said web site from said connection control module and said at least one similar web site code from said connection control module to said input/output interface. 27. The system according to claim 26 wherein said web site code search engine further includes a search engine control interface for managing and controlling said web site code search engine.
